# EUROPÄISCHE PATENTSCHRIFT

(11) **EP 2 492 396 B1**
(45) Veröffentlichungstag und Bekanntmachung des Hinweises auf die Patenterteilung: **08.04.2015**
(21) Anmeldenummer: 11001515.3
(22) Anmeldetag: 23.02.2011
(51) Int. Cl.: E01C 19/48

(54) **Straßenbaumaschine mit einem Materialabweiser**
Street construction machine with a material deflector
Engin routier doté d'un séparateur de matériaux

(43) Veröffentlichungstag der Anmeldung: 29.08.2012
(73) Patentinhaber: Joseph Vögele AG, 67067 Ludwigshafen (DE)
(72) Erfinder: Schmidt, Thomas, 68723 Plankstadt (DE); Seibel, Martin, 76646 Heidelsheim (DE)
(74) Vertreter: Grünecker Patent- und Rechtsanwälte PartG mbB

(56) Entgegenhaltungen:
- DE-U1- 29 915 875
- US-A- 4 026 658
- US-A- 5 000 650

## Beschreibung

Die Erfindung bezieht sich auf eine Straßenbaumaschine gemäß dem Oberbegriff des Anspruchs 1, sowie auf ein Verfahren zum Betrieb einer solchen Straßenbaumaschine.

Aus der Praxis ist es bereits bekannt, Materialabweiser vor dem Raupenfahrwerk oder den Vorderrädern eines Straßenfertigers oder eines Beschickers vorzusehen, um Einbaugut, welches aus dem Materialbunker der jeweiligen Straßenbaumaschine nach vorne vor die Maschine fällt, vor dem Fahrwerk zu entfernen. Das Ziel ist es dabei, Unebenheiten auf dem Planum, auf dem ein Straßenbelag hergestellt werden soll, zu entfernen, da sich solche Unebenheiten negativ auf die Qualität des hergestellten Straßenbelages auswirken. Während der Transportfahrt, bei der sich die Straßenbaumaschine außerhalb eines Einbauvorgangs von einem Punkt zu einem anderen Punkt bewegt, oder beim Auffahren der Straßenbaumaschine auf einen Tieflader werden die Materialabweiser manuell nach oben geklappt und in der vollständig hochgeklappten Stellung mechanisch verriegelt. Dadurch ermöglichen sie einen größeren Auffahrwinkel der Straßenbaumaschine, und eine Beschädigung des Materialabweisers durch ein Hängenbleiben an Hindernissen wird verhindert. Das manuelle Hochklappen des Materialabweisers ist jedoch mühsam und zeitaufwändig. Ein solcher herkömmlicher Materialabweiser geht aus der US 3,732,024 A hervor.

Auch während des Einbauvorgangs muss der Materialweiser zeitweise hochgeklappt werden, um beispielsweise Hindernisse wie Kanaldeckel überfahren zu können. Hierbei ist die Zugänglichkeit des Materialabweisers teilweise sehr schlecht, da die Wände des Gutbunkers der Straßenbaumaschine, die sich unmittelbar oberhalb des Materialabweisers befinden, nach unten geklappt sein können.

Eine Verbesserung wird ermöglicht durch einen Materialabweiser für eine Straßenbaumaschine, der in der DE 299 15 875 U1 beziehungsweise in der parallelen EP 1 083 263 A1 beschrieben ist. Dieses, den nächstliegenden Stand der Technik darstellende Dokument erkennt bereits das Problem, dass Materialabstreifer beim Verladen eines Straßenfertigers auf einen Tieflader stören können oder an Hindernissen unerwünschte Spuren in der Straßendecke erzeugen. Daher schlägt die DE 299 15 875 U1 vor, den Materialabweiser so zu lagern, dass er lediglich in seinem Bewegungsweg nach unten begrenzt ist, also nach oben einen Freigang hat.

Aufgabe der vorliegenden Erfindung ist es, eine Straßenbaumaschine mit einem Materialabweiser insbesondere hinsichtlich einer noch einfacheren Handhabung für den Bediener weiter zu verbessern.

Diese Aufgabe wird gelöst durch eine Straßenbaumaschine mit den Merkmalen des Anspruchs 1 beziehungsweise durch ein Verfahren zum Betrieb einer Straßenbaumaschine mit den Merkmalen des Anspruchs 10. Vorteilhafte Weiterbildungen der Erfindung sind in den Unteransprüchen angegeben.

Die Erfindung zeichnet sich dadurch aus, dass die Straßenbaumaschine ein Steuerungssystem aufweist, mittels dessen ein Bediener zwischen verschiedenen Betriebsarten wählen kann, wobei zumindest die Betriebsarten "Einbau" und "Transport" zur Verfügung stehen. In der Betriebsart "Einbau" ist die Straßenbaumaschine dazu eingerichtet, zum Einbau eines Straßenbelages beizutragen. In der Betriebsart "Transport" kann die Straßenbaumaschine von einem Punkt zu einem anderen Punkt bewegt werden, ohne dass gleichzeitig ein Einbauvorgang stattfindet.

Das Steuerungssystem in der erfindungsgemäßen Straßenbaumaschine ist nun dazu eingerichtet, den Materialabweiser in der Betriebsart "Transport" automatisch vollständig Hochzuschwenken. In der Betriebsart "Einbau" hingegen ist das Steuerungssystem dazu eingerichtet, den Bediener manuell eine Schwenkposition des Materialabweisers einstellen zu lassen.

Der Vorteil der erfindungsgemäßen Straßenbaumaschine liegt darin, dass sich der Bediener kaum noch um den Materialabweiser kümmern muss. Es genügt, wenn der Bediener zwischen den Betriebsarten "Einbau" und "Transport" auswählt. Das Steuerungssystem sorgt dann automatisch für die optimale Ausrichtung des Materialabweisers, ohne dass der Bediener den Materialabweiser separat betätigen, geschweige denn manuell hochklappen muss. Auf diese Weise wird die Handhabung des Materialabweisers erheblich verbessert, und Schäden an der Straßenbaumaschine oder an anderen Transportfahrzeugen wie Tiefladern können vermieden werden. Denn bei der erfindungsgemäßen Straßenbaumaschine kann es nicht mehr vorkommen, dass ein Bediener dieser Straßenbaumaschine bei einer Transportfahrt oder beim Verladen der Straßenbaumaschine vergisst, den Materialabweiser in seine hochgeklappte Position zu bringen.

Eine weitere Vereinfachung lässt sich dadurch erzielen, dass im Steuerungssystem eine von dem Materialabweiser in der Betriebsart "Einbau" einzunehmende Schwenkpositionen (gegebenenfalls veränderbar) gespeichert ist. Wenn der Bediener die Betriebsart "Einbau" auswählt oder aktiviert, wird der Materialabweiser automatisch in diese gespeicherte Schwenkposition gebracht. Aus dieser Position heraus kann er manuell weiter verschwenkt werden. Der Bediener kann im Steuerungssystem eine neue Standard-Schwenkposition für die Betriebsart "Einbau" speichern.

Vorzugsweise ist der Materialabweiser gegenüber der Horizontalen um einen Winkel hochschwenkbar, der bis zu 30° beträgt, bevorzugt bis zu 35°. Dies ermöglicht sowohl einen günstigen Auffahrwinkel der Straßenbaumaschine beispielsweise auf einen Tieflader, als auch ein sicheres Entfernen des Materialabweisers bei Hindernissen vor der Straßenbaumaschine.

Die automatische Verstellung des Materialabweisers in seine unterschiedlichen Schwenkpositionen kann mittels eines Hydrauliksystems realisiert werden. Üblicherweise sind auf Straßenbaumaschinen ohnehin bereits Hydraulikkreise vorhanden, beispielsweise zum Verstellen von Gutbunkerwänden oder Einbaubohlen, so dass das Vorsehen eines weiteren Hydrauliksystems für den Materialabweiser keinen erheblichen Zusatzaufwand darstellt. Denkbar wäre es auch, das Hydrauliksystem für den Materialabweiser in ein bereits bestehendes Hydrauliksystem zu integrieren.

Besondere Vorzüge entfalten sich, wenn der Materialabweiser außerhalb seiner vollständig hochgeschwenkten Position mit einem ein Hochschwenken zulassenden Freigang gelagert ist. Dieser Freigang erlaubt es, dass sich der Materialabweiser von alleine nach oben bewegt, wenn er Hindernisse vor der Straßenbaumaschine überfährt. Dadurch wird verhindert, dass der Materialabweiser an solchen Hindernissen wie beispielsweise Kanaldeckeln hängen bleibt und so die Bewegung der gesamten Straßenbaumaschine blockieren könnte. Nach dem Überfahren eines Hindernisses kann sich der Materialabweiser unter seinem Eigengewicht wieder in die vorher festgelegte Schwenkstellung verstellen.

Um einen solchen Freigang zu ermöglichen, ist vorzugsweise ein Angriffspunkt eines Hydraulikzylinders am Materialabweiser in einem Langloch gelagert. Das Anordnen eines solchen Langlochs direkt am Angriffspunkt des Hydraulikzylinders ermöglicht auf konstruktiv einfache Weise einen Freigang für den Materialabweiser.

Zusätzlich oder alternativ ist es möglich, dass ein den Materialabweiser verschwenkender Hydraulikzylinder eine Schwimmstellung einnimmt, um den Materialabweiser mit einem Freigang zu lagern. Die Schwimmstellung des Hydraulikzylinders könnte sogar einstellbar sein, um den Winkel einzustellen, über den sich der Materialabweiser mit Freigang verstellen kann.

In seiner vollständig hochgeschwenkten Position sollte der Materialabweiser gesichert sein, um nicht ungewollt nach unten verschwenken zu können. Dies kann dadurch erfolgen, dass der Materialabweiser in seiner vollständig hochgeschwenkten Position durch ein Rückschlagventil im Hydrauliksystem, durch einen Riegel und/oder durch einen mechanischen Kniehebel gehalten ist.

An der Straßenbaumaschine kann ferner ein Sonder-Bedienelement wie beispielsweise ein Taster vorgesehen sein, bei dessen Betätigung in der Betriebsart "Einbau" das Steuerungssystem automatisch ein Hochschwenken des Materialabweisers in dessen vollständig hochgeschwenkte Position veranlasst. Dieses Sonder-Bedienelement kann vom Bediener der Straßenbaumaschine betätigt werden, wenn er ein Hindernis oder eine andere Situation erkennt, die ein schnelles oder temporäres Hochschwenken des Materialabweisers erfordern.

Bei der Straßenbaumaschine kann es sich insbesondere um einen Straßenfertiger, um einen Beschicker für einen Straßenfertiger oder um einen Bagger handeln. Alternativ dazu könnten jedoch auch andere Baumaschinen, beispielsweise Gleisbaumaschinen, einen Materialabweiser aufweisen und erfindungsgemäß konfiguriert sein.

Die Erfindung bezieht sich auch auf ein Verfahren zum Betrieb einer Straßenbaumaschine, bei dem ein Bediener mittels eines Steuerungssystems der Straßenbaumaschine zumindest zwischen den Betriebsarten "Einbau" und "Transport" wählt, wobei der Materialabweiser in der Betriebsart "Transport" automatisch in seine höchste Schwenkposition hochgeschwenkt wird, und wobei der Bediener in der Betriebsart "Einbau" manuell eine Schwenkposition des Materialabweisers einstellt.

Im Folgenden wird ein vorteilhaftes Ausführurigsbeispiel der Erfindung anhand einer Zeichnung näher erläutert. Im Einzelnen zeigen:
- Figur 1: eine erfindungsgemäße Straßenbaumaschine, insbesondere einen Straßenfertiger,
- Figur 2: den Materialabweiser einer erfindungsgemäßen Straßenbaumaschine in einer unteren Schwenkstellung,
- Figur 3: den in Figur 2 gezeigten Materialabweiser in seiner vollständig hochgeschwenkten Position,
- Figur 4: ein zweites Ausführungsbeispiel eines erfindungsgemäßen Materialabweisers und
- Figur 5: den in Figur 4 gezeigten Materialabweiser in seiner vollständig hochgeschwenkten Position.

Gleiche Komponenten sind in den Figuren durchgängig mit gleichen Bezugszeichen versehen.

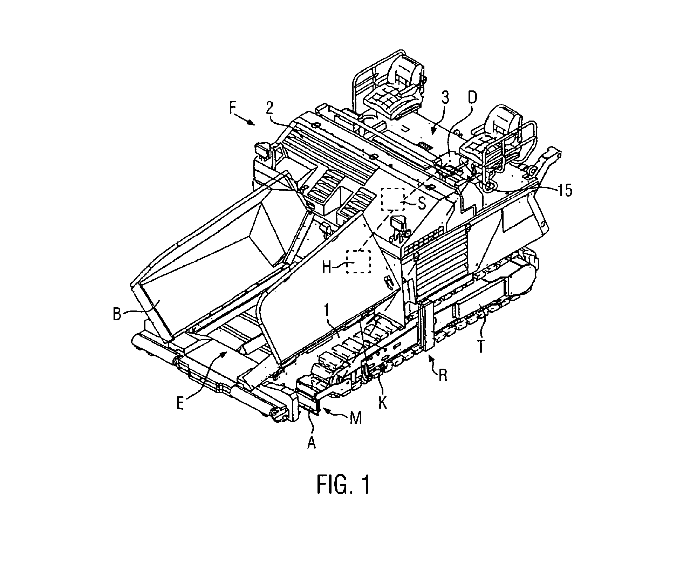

Figur 1 zeigt einen Straßenfertiger F als Beispiel für eine erfindungsgemäße Straßenbaumaschine. Bei der Straßenbaumaschine F kann es sich alternativ um einen Bagger oder Beschicker handeln. Dieser Straßenfertiger F weist ein Chassis 1 mit einem Fahrwerk R auf, im gezeigten Fall ein Raupenfahrwerk. Auf dem Chassis 1 ist an dem in Arbeitsfahrtrichtung vorderen Ende ein Gutbunker B für Einbaugut vorgesehen, der von einer Einfüllseite E her befüllt wird. Auf dem Chassis 1 befindet sich eine Primärantriebsquelle 2, beispielsweise ein Dieselmotor, und hinter dieser Antriebsquelle 2 befindet sich ein Führerstand 3.

Das Raupenfahrwerk R weist an beiden Längsseiten des Chassis 1 in jeweils einer Fahrwerkshälfte einen längsliegenden Träger T auf, der höhenbeweglich oder pendelnd am Chassis 1 abgestützt sein kann. Der Träger T trägt auf Kettenrädern eine Raupenkette K. An jedem Träger T ist in Arbeitsfahrtrichtung vor dessen Raupenkette K ein Materialabweiser M angeordnet. Der Materialabweiser M dient dazu, auf dem Planum vor dem Straßenfertiger F liegendes Material zu verlagern und insbesondere vom Fahrwerk R fernzuhalten. Der Materialabweiser M kann zu diesem Zweck eine gegenüber der Arbeitsfahrtrichtung schräg angestellte Abweisefläche A aufweisen, mittels derer er das auf dem Planum liegende Material nach innen zwischen die Raupenketten K verlagert, um so die Laufspuren der Raupenketten K freizuhalten.

Die erfindungsgemäße Straßenbaumaschine F weist ein Steuerungssystem S auf. Mittels einer Bedieneinrichtung D auf dem Führerstand 3 kann ein Bediener der Straßenbaumaschine F zwischen verschiedenen Betriebsarten auswählen, insbesondere zwischen den Betriebsarten "Transport" und "Einbau". Die Betriebsart "Einbau" wählt der Bediener, wenn die Straßenbaumaschine aktiv an einem Straßenbauprozess teilnehmen soll, beispielsweise durch das Aufbringen des Straßenbelages auf das Planum oder durch den Transport von Einbaumaterial zu einem nachgeordneten Straßenfertiger. Das Steuerungssystem S ist vorzugsweise dazu eingerichtet, beim Auswählen der Betriebsart "Einbau" bestimmte Arbeitsaggregate wie Fördervorrichtungen oder eine Einbaubohle in einen aktiven Betriebszustand zu versetzen. Die Betriebsart "Transport" wählt der Bediener hingegen, wenn die Straßenbaumaschine F lediglich versetzt werden soll, ohne dass dabei der Einbau eines Straßenbelages erfolgt.

Der Straßenfertiger F gemäß Figur 1 verfügt des weiteren über ein Hydrauliksystem H. Dieses schematisch dargestellte Hydrauliksystem H wird vom Steuerungssystem S angesteuert. Das Hydrauliksystem wird unter anderem dazu verwendet, den Materialabweiser M zu verschwenken.

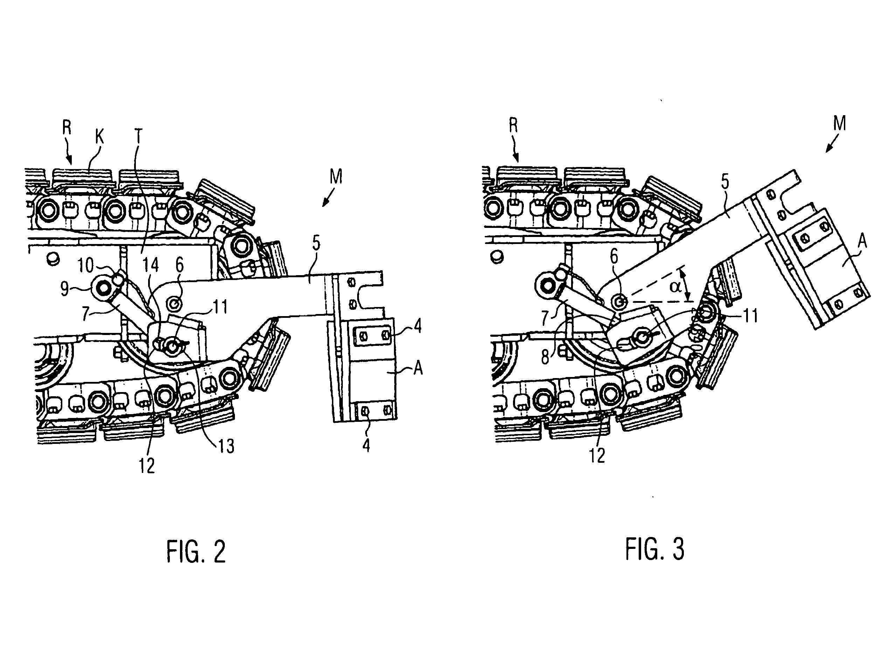

Figur 2 zeigt eine Seitenansicht eines erfindungsgemäßen Materialabweisers M, der am Fahrwerk R einer Straßenbaumaschine F vorgesehen ist. Der Materialabweiser M ist so angeordnet, dass sich seine Abweisefläche A in Arbeitsfahrtrichtung vor dem vorderen Ende des Fahrwerks R der Straßenbaumaschine F befindet. Bei dem Fahrwerk R muss es sich nicht um eine Raupenfahrwerk handeln, sondern es kann sich ebenso gut um ein Räderfahrwerk handeln.

Die Abweisefläche A ist gegenüber der Arbeitsfahrtrichtung des Fahrwerks R schräg angestellt. Über Befestigungsmittel 4, beispielsweise Schrauben, ist die Abweisefläche A lösbar und gegebenenfalls justierbar an einem Ausleger 5 befestigt. Dieser Ausleger ist um eine horizontale Schwenkachse 6 schwenkbar. Diese Schwenkachse 6 befindet sich am Träger T des Fahrwerks R.

Ein Hydraulikzylinder 7 ist zwischen dem Träger T des Fahrwerks R und dem Ausleger 5 vorgesehen. Der Hydraulikzylinder 7 ist durch das Hydrauliksystem H mit unter Druck stehendem Fluid versorgbar, um einen Kolben 8 einzuziehen oder auszufahren und so die Länge des Hydraulikzylinders 7 zu verändern. Das in Figur 2 linke Ende des Hydraulikzylinders 7 ist an einem Trägerelement 9 befestigt, das seinerseits mittels eines Schwenklagers 10 schwenkbar am Träger T des Fahrwerks R befestigt ist. Das dem Trägerelement 9 gegenüberliegende, äußere Ende des Kolbens 8 (siehe Figur 3) stellt den Angriffspunkt 11 des Hydraulikzylinders 7 dar. Dieser Angriffspunkt 11, der beispielsweise einen in horizontaler Richtung angeordneten Bolzen umfassen kann, ist in einem Langloch 12 im Ausleger 5 angeordnet.

Figur 2 zeigt den Materialabweiser M in einer abgesenkten Stellung, in der sich der Ausleger 5 in etwa in horizontaler Richtung erstreckt, d.h. der Materialabweiser (oder Abstreifer) M liegt auf den Planum auf oder an einer Anschlagschraube an. Der Hydraulikzylinder 7 befindet sich in seiner eingezogenen Stellung. Der Angriffspunkt 11 des Hydraulikzylinders 7 befindet sich in der Mitte des Langlochs 12 im Ausleger 5. Das Zusammenspiel zwischen dem Langloch 12 und dem Angriffspunkt 11 des Hydraulikzylinders 7 erlaubt dem Materialabweiser M einen Freigang nach oben und nach unten. Ohne eine Verstellung des Hydraulikzylinders 7 kann der Materialabweiser M um einen Schwenkwinkel nach unten verschwenken, bis der Angriffspunkt 11 des Hydraulikzylinders 7 am rechten Ende 13 des Langlochs 12 oder an einer Anschlagschraube angelangt, oder er kann nach oben verschwenken, bis der Angriffspunkt 11 des Hydraulikzylinders 7 am linken Ende 14 des Langlochs 12 anlangt. Eine solche passive, temporäre Schwenkbewegung kann der Materialabweiser M ausführen, wenn er auf ein Hindernis vor der Straßenbaumaschine F trifft. Ein Freigang kann auch dadurch ermöglicht werden, dass der Hydraulikzylinder 7 eine Schwimmstellung einnimmt.

Figur 3 zeigt den Materialabweiser M in seiner vollständig nach oben verschwenkten Position. Gegenüber der Horizontalen ist der Materialabweiser M um einen Winkel α von etwa 27° nach oben verschwenkt worden, indem das Hydrauliksystem H den Hydraulikzylinder 7 mit Hochdruckfluid versorgt hat und den Hydraulikzylinder 7 dadurch gestreckt hat. Durch diese Streckung des Hydraulikzylinders 7 beaufschlagt der Angriffspunkt 11 des Hydraulikzylinders 7 das vordere Ende 13 des Langlochs 12 und bewegt den Ausleger 5 so nach oben. Diese Bewegung kann durch das Steuersystem H verursacht werden, indem der Bediener auf dem Bedienfeld D die Betriebsart "Transport" auswählt. Die Bewegung kann auch dadurch ausgelöst werden, dass ein Bediener auf dem Führerstand 3 der Straßenbaumaschine F ein Sonder-Bedienelement 15 betätigt, beispielsweise eine Taste 15, um während der Betriebsart "Einbau" und ohne einen Wechsel dieser Betriebsart den Materialabweiser M temporär anzuheben.

Die Bedienung der erfindungsgemäßen Straßenbaumaschine F wird dadurch erheblich vereinfacht, dass die Bewegung des Materialabweisers M automatisch dadurch erfolgt, dass der Bediener eine bestimmte Betriebsart der Straßenbaumaschine F auswählt und/oder ein Sonder-Bedienelement 15 betätigt. Ein aufwändiges, manuelles Hochklappen des Materialabweiser M kann damit entfallen.

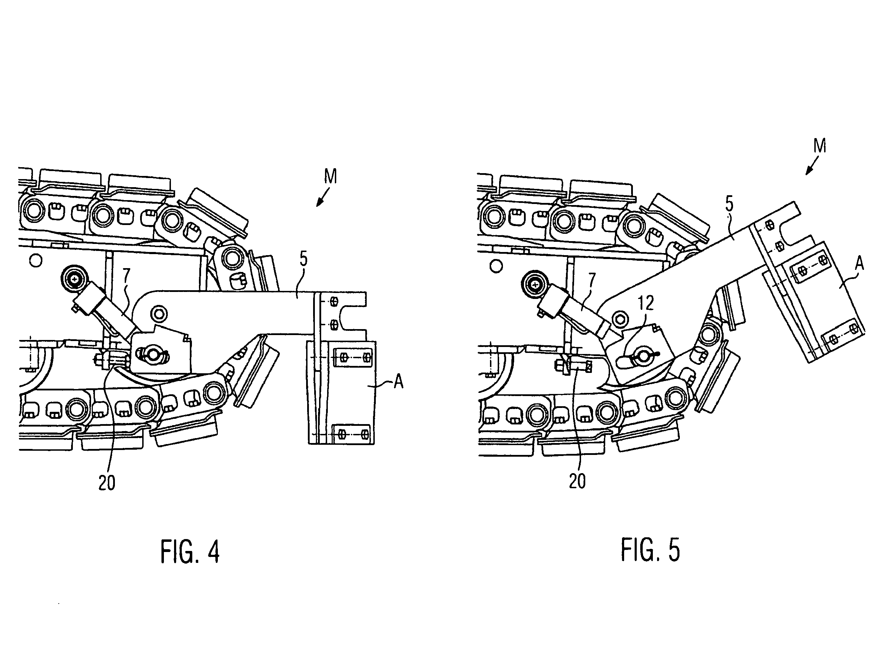

Figur 4 zeigt ein zweites Ausführungsbeispiel eines Materialabweisers M. Dieses zweite Ausführungsbeispiel unterscheidet sich dadurch vom ersten Ausführungsbeispiel, dass am Träger T des Fahrwerks R des Straßenfertigers F eine Anschlagschraube 20 vorgesehen ist. Diese Anschlagschraube 20 ist noch deutlicher in der vollständig hochgeschwenkten Stellung des Materialabweisers M zu erkennen, die in Figur 5 dargestellt ist. Die Anschlagschraube 20 wirkt mit einem entsprechenden Gegenanschlag am Ausleger 5 des Materialabweisers M zusammen und begrenzt den Schwenkweg des Auslegers 5 nach hinten. Gegebenenfalls kann die Anschlagschraube 20 justiert werden, um den nach hinten möglichen Schwenkwinkel des Auslegers 5 des Materialabweisers M zu verändern.

Denkbar wäre es, dass der Materialabweiser M in seiner Normalstellung nicht einen Freigang nach oben und nach unten hat, sondern dass er lediglich einen Freigang nach oben (oder nach unten) hat, um Hindernissen ausweichen zu können.

## Patentansprüche

1. Straßenbaumaschine (F) mit einem Fahrwerk (R) und mindestens einem in Fahrtrichtung vor dem Fahrwerk (R) angeordneten, hochschwenkbaren und absenkbaren Materialabweiser (M), wobei die Straßenbaumaschine (F) ein Steuerungssystem (S) aufweist, mittels dessen ein Bediener zumindest zwischen den Betriebsarten "Einbau" und "Transport" wählen kann, wobei die Straßenbaumaschine in der Betriebsart "Einbau" dazu eingerichtet, zum Einbau eines Straßenbelages beizutragen, und in der Betriebsart "Transport" von einem Punkt zu einem anderen Punkt bewegbar ist, ohne dass gleichzeitig ein Einbauvorgang stattfindet, **dadurch gekennzeichnet, dass**
das Steuerungssystem (S) ferner dazu eingerichtet ist, den Materialabweiser (M) in der Betriebsart "Transport" automatisch vollständig hochzuschwenken und den Bediener in der Betriebsart "Einbau" manuell eine Schwenkposition des Materialabweisers (M) einstellen zu lassen.

2. Straßenbaumaschine nach Anspruch 1, **dadurch gekennzeichnet, dass** der Materialabweiser (M) gegenüber der Horizontalen um einen Winkel (α) hochschwenkbar ist, der bis zu 30° beträgt, bevorzugt bis zu 35°.

3. Straßenbaumaschine nach einem der vorangehenden Ansprüche, **dadurch gekennzeichnet, dass** der Materialabweiser (M) mittels eines Hydrauliksystems (H) schwenkbar ist.

4. Straßenbaumaschine nach einem der vorangehenden Ansprüche, **dadurch gekennzeichnet, dass** der Materialabweiser (M) außerhalb seiner vollständig hochgeschwenkten Position mit einem ein Hochschwenken und/oder ein Herunterschwenken zulassenden Freigang gelagert ist.

5. Straßenbaumaschine nach Anspruch 4, **dadurch gekennzeichnet, dass** ein Angriffspunkt (11) eines Hydraulikzylinders (7) am Materialabweiser (M) in einem Langloch (12) gelagert ist.

6. Straßenbaumaschine nach Anspruch 4, **dadurch gekennzeichnet, dass** ein Hydraulikzylinder (7) eine Schwimmstellung einnimmt, um den Materialabweiser (M) mit einem Freigang zu lagern.

7. Straßenbaumaschine nach einem der vorangehenden Ansprüche, **dadurch gekennzeichnet, dass** der Materialabweiser (M) in seiner vollständig hochgeschwenkten Position durch ein Rückschlagventil im Hydrauliksystem, durch einen Riegel und/oder durch einen mechanischen Kniehebel gehalten ist.

8. Straßenbaumaschine nach einem der vorangehenden Ansprüche, **dadurch gekennzeichnet, dass** ein Sonder-Bedienelement (15) vorgesehen ist, bei dessen Betätigung in der Betriebsart "Einbau" das Steuerungssystem (5) automatisch ein Hochschwenken des Materialabweisers (M) in seine vollständig hochgeschwenkte Position veranlasst.

9. Straßenbaumaschine nach einem der vorangehenden Ansprüche, **dadurch gekennzeichnet, dass** die Straßenbaumaschine (F) ein Straßenfertiger, ein Bagger oder ein Beschicker ist.

10. Verfahren zum Betrieb einer Straßenbaumaschine (F) mit einem Fahrwerk (R) und einem in Fahrtrichtung vor dem Fahrwerk (R) angeordneten, hochschwenkbaren und absenkbaren Materialabweiser (M), wobei ein Bediener mittels eines Steuerungssystems (S) der Straßenbaumaschine (F) zumindest zwischen den Betriebsarten "Einbau" und "Transport" wählt, wobei die Straßenbaumaschine in der Betriebsart "Einbau" dazu eingerichtet, zum Einbau eines Straßenbelages beizutragen, und in der Betriebsart "Transport" von einem Punkt zu einem anderen Punkt bewegbar ist, ohne dass gleichzeitig ein Einbauvorgang stattfindet, **dadurch gekennzeichnet, dass**
der Materialabweiser (M) in der Betriebsart "Transport" automatisch in seine höchste Schwenkposition hochgeschwenkt wird, und dass der Bediener in der Betriebsart "Einbau" manuell eine Schwenkposition des Materialabweisers (M) einstellt.

11. Verfahren nach Anspruch 10, **dadurch gekennzeichnet, dass** der Materialabweiser (M) außerhalb seiner vollständig hochgeschwenkten Position mit einem ein Hochschwenken und/oder ein Herunterschwenken zulassenden Freigang gelagert wird.

## Claims

1. Road making machine (F) with a running gear (R) and at least one material deflector (M) which is arranged in front of the running gear (R) in the driving direction and which can be pivoted up and lowered, wherein the road making machine (F) comprises a control system (S) by means of which an operator can choose at least between the operating modes "laying" and "transport", wherein the road making machine, in the operating mode "laying", is adapted to contribute to the laying of a road surface, and, in the operating mode "transport", is moveable from one point to another without any laying operation simultaneously taking place,
**characterized in that**
the control system (S) further is adapted to automatically completely pivot up the material deflector (M) in the operating mode "transport", and to let the operator adjust a pivot position of the material deflector (M) manually in the operating mode "laying".

2. Road making machine according to claim 1, **characterized in that** the material deflector (M) can be pivoted up with respect to the horizontal about an angle (α) of up to 30°, preferably up to 35°.

3. Road making machine according to one of the preceding claims, **characterized in that** the material deflector (M) can be pivoted by means of a hydraulic system (H).

4. Road making machine according to one of the preceding claims, **characterized in that** the material deflector (M) is, when it is not completely pivoted up, retained with free travel permitting to swivel it to the top and/or to the bottom.

5. Road making machine according to claim 4, **characterized in that** a point of application (11) of a hydraulic cylinder (7) at the material deflector (M) is retained in an oblong hole (12).

6. Road making machine according to claim 4, **characterized in that** a hydraulic cylinder (7) takes a floating position to retain the material deflector (M) with free travel.

7. Road making machine according to one of the preceding claims, **characterized in that** the material deflector (M) is retained, when completely pivoted up, by a check valve in the hydraulic system, by a latch and/or by a mechanical toggle.

8. Road making machine according to one of the preceding claims, **characterized in that** a special operational control (15) is provided, at the actuation of which in the operating mode "laying", the control system (5) automatically causes the material deflector (M) to pivot up into its completely raised position.

9. Road making machine according to one of the preceding claims, **characterized in that** the road making machine (F) is a road finishing machine, an excavator or a feeder.

10. Method of operating a road making machine (F) with a running gear (R) and a material deflector (M) which is arranged in front of the running gear (R) in the driving direction and which can be pivoted up and lowered, wherein an operator chooses, by means of a control system (S) of the road making machine (F), at least between the operating modes "laying" and "transport", wherein the road making machine, in the operating mode "laying", is adapted to contribute to the laying of a road surface, and, in the operating mode "transport", is moveable from one point to another without any laying operation simultaneously taking place,
**characterized in that**
the material deflector (M) is automatically pivoted up to its highest pivot position in the operating mode "transport", and that the operator manually adjusts a pivot position of the material deflector (M) in the operating mode "laying".

11. Method according to claim 10, **characterized in that** the material deflector (M) is, when it is not completely pivoted up, retained with free travel permitting it to pivot up and/or down.

## Revendications

1. Engin de construction de routes (F) comprenant un train de roulement (R) et au moins un déflecteur de matériau (M), qui est agencé devant le train de roulement (R) en se référant à la direction de marche, et qui peut être relevé par basculement et abaissé, l'engin de construction de routes (F) présentant un système de commande (S) au moyen duquel une personne de service peut choisir au moins entre les modes de fonctionnement "pose d'enrobé" et "transport", et l'engin de construction de routes étant conçu pour contribuer à la pose d'un revêtement routier ou enrobé dans le mode de fonctionnement "pose d'enrobé", et pour être déplacé d'un point à un autre point dans le mode de fonctionnement "transport" sans qu'ait lieu simultanément une opération de pose d'enrobé, **caractérisé en ce que** le système de commande (S) est par ailleurs conçu pour faire basculer automatiquement le déflecteur de matériau (M) dans sa position entièrement relevée, dans le mode de fonctionnement "transport", et pour permettre à la personne de service de régler manuellement une position de basculement du déflecteur de matériau (M), dans le mode de fonctionnement "pose d'enrobé".

2. Engin de construction de routes selon la revendication 1, **caractérisé en ce que** le déflecteur de matériau (M) peut être basculé vers le haut d'un angle (α) par rapport à l'horizontale, qui peut prendre une valeur jusqu'à 30°, de préférence jusqu'à 35°.

3. Engin de construction de routes selon l'une des revendications précédentes, **caractérisé en ce que** le déflecteur de matériau (M) peut être basculé au moyen d'un système hydraulique (H).

4. Engin de construction de routes selon l'une des revendications précédentes, **caractérisé en ce que** le déflecteur de matériau (M) est monté, à l'exception de sa position totalement relevée, avec une plage de liberté de mouvement autorisant un basculement vers le haut et/ou un basculement vers le bas.

5. Engin de construction de routes selon la revendication 4, **caractérisé en ce qu'**un point d'attaque (11) d'un vérin hydraulique (7) sur le déflecteur de matériau (M), est monté dans un trou oblong (12).

6. Engin de construction de routes selon la revendication 4, **caractérisé en ce qu'**un vérin hydraulique (7) prend une position flottante, pour assurer le montage avec une plage de liberté de mouvement du déflecteur de matériau (M).

7. Engin de construction de routes selon l'une des revendications précédentes, **caractérisé en ce que** le déflecteur de matériau (M) est maintenu dans sa position entièrement relevée, par une vanne anti-retour dans le système hydraulique, par un verrou et/ou par un mécanisme à genouillère mécanique.

8. Engin de construction de routes selon l'une des revendications précédentes, **caractérisé en ce qu'**il est prévu un élément de pilotage particulier (15), dont l'actionnement, au cours du mode de fonctionnement "pose d'enrobé", conduit le système de commande (5) à produire automatiquement un basculement vers le haut du déflecteur de matériau (M), dans sa position entièrement relevée.

9. Engin de construction de routes selon l'une des revendications précédentes, **caractérisé en ce que** l'engin de construction de routes (F) est un finisseur de route, un excavateur ou un alimentateur.

10. Procédé pour faire fonctionner un engin de construction de routes (F) comprenant un train de roulement (R) et au moins un déflecteur de matériau (M), qui est agencé devant le train de roulement (R) en se référant à la direction de marche, et qui peut être relevé par basculement et abaissé, une personne de service choisissant, à l'aide d'un système de commande (S) de l'engin de construction de routes (F), au moins entre les modes de fonctionnement "pose d'enrobé" et "transport", et l'engin de construction de routes étant conçu pour contribuer à la pose d'un revêtement routier ou enrobé dans le mode de fonctionnement "pose d'enrobé", et pour être déplacé d'un point à un autre point dans le mode de fonctionnement "transport" sans qu'ait lieu simultanément une opération de pose d'enrobé, **caractérisé en ce que** dans le mode de fonctionnement "transport", le déflecteur de matériau (M) est basculé automatiquement dans sa position entièrement relevée, et **en ce que** dans le mode de fonctionnement "pose d'enrobé", la personne de service règle manuellement une position de basculement du déflecteur de matériau (M).

11. Procédé selon la revendication 10, **caractérisé en ce que** l'on prévoit que le déflecteur de matériau (M) soit monté, à l'exception de sa position totalement relevée, avec une plage de liberté de mouvement autorisant un basculement vers le haut et/ou un basculement vers le bas.
